# EUROPÄISCHE PATENTSCHRIFT

(11) **EP 0 330 266 B1**
(45) Veröffentlichungstag und Bekanntmachung des Hinweises auf die Patenterteilung: **27.10.1993**
(21) Anmeldenummer: 89200387.2
(22) Anmeldetag: 17.02.1989
(51) Int. Cl.: G03B 42/04

(54) **Röntgenaufnahmegerät mit einer in einem Wagen verfahrbaren Aufnahmekassette**
Radiography apparatus with an exposer cassette which can be conveyed by a vehicle
Appareil de radiographie avec une cassette-radio sur un chariot mobile

(30) Priorität: 22.02.1988 DE 3805409
(43) Veröffentlichungstag der Anmeldung: 30.08.1989
(73) Patentinhaber: Philips Patentverwaltung GmbH, 22335 Hamburg (DE); Philips Electronics N.V., 5621 BA Eindhoven (NL)
(72) Erfinder: Linhart, Claus H., Dr.-Ing., D-2000 Hamburg 71 (DE)
(74) Vertreter: Hartmann, Heinrich, Dipl.-Ing.

(56) Entgegenhaltungen:
- DE-B- 1 958 825
- DE-B- 2 125 674
- DE-B- 2 226 473
- US-A- 3 829 698
- US-A- 4 199 687

## Beschreibung

Die Erfindung betrifft ein Röntgenaufnahmegerät mit einer Aufnahmekassette nach dem Oberbegriff des Anspruchs 1. Ein solches Röntgenaufnahmegerät ist aus der DE-AS 22 26 473 bekannt.

Auf eine der Umlenkrollen wirkt dabei ein erster Elektromotor ein, der eine Verschiebung der Aufnahmekassette senkrecht zur Einschubrichtung bewirkt. Die Verschiebung des Kassettenwagens in der Einschubrichtung erfolgt mittels einer zusätzlichen Zugmittelschleife, die über zwei in Einschubrichtung gegeneinander versetzte Umlenkrollen geführt ist, von denen eine durch einen zweiten Elektromotor antreibbar ist. Bei einer Röntgenaufnahme muß der Wagen mitsamt der Aufnahmekassette über eine relativ große Strecke von der Parkstellung in die Aufnahmestellung verfahren werden. Die bei einer Röntgenaufnahme mit vertikaler Unterteilung des Aufnahmeformats erforderliche Verschiebung der Kassette senkrecht zur Einschubrichtung ist hingegen gering; außerdem erfaßt diese Verschiebung nicht den erwähnten Wagen, da die Verschiebung des Wagens in die Aufnahmestellung und die ggf. erforderliche Verschiebung der Aufnahmekassette in dem Wagen zumindest annäherd in der gleichen Zeit erfolgen sollen, muß der zweite Elektromotor wesentlich leistungsstärker sein als der erste Elektromotor.

Aufgabe der vorliegenden Erfindung ist es, ein Röntgenaufnahmegerät der eingangs genannten Art so zu gestalten, daß zwei gleichartige, relativ leistungsschwache Elektromotoren verwendet werden können. Diese Aufgabe wird erfindungsgemäß durch die im Anspruch 1 angegebenen Maßnahmen gelöst.

Bei der Erfindung sind beide Motorantriebe gleichzeitig wirksam; infolgedessen müssen sie nur jeweils für die halbe Antriebsleistung ausgelegt sein. Wenn die beiden Motorantriebe mit je einer der gerätefesten Umlenkrollen (die nicht durch ein Trum miteinander verbunden sein dürfen) gekoppelt sind, dann verkürzen sich die Trums zwischen dem einen Paar gerätefester Rollen und dem zugehörigen Paar von Rollen am Wagen, während sich die Trums zwischen dem anderen gerätefesten Rollenpaar und dem anderen Rollenpaar am Wagen entsprechend verlängern, so daß der Wagen in der Einschubrichtung bewegt wird. Wird die Drehrichtung beider Motorantriebe umgekehrt, erfolgt eine Verschiebung in der entgegengesetzten Richtung.

Als Zugmittel dienen vorzugsweise Kunststoff- Zahnriemen; jedoch können auch andere Zugmittel verwendet werden, beispielsweise ein Seil oder dergleichen. Auch ist es möglich verschiedene Zugmittel, z.B. ein Seil und einen Zahnriemen in einer gemeinsamen Schleife miteinander zu verbinden. Mit "Trum" ist der Abschnitt eines Zugmittels zwischen zwei Umlenkrollen bezeichnet. Der Begriff "Umlenkrollen" ist weit zu interpretieren; darunter sollen auch beispielsweise feststehende Stifte (Umlenkpunkte) mit vorzugsweise kreisförmigen Querschnitt verstanden werden, um die das Zugmittel mit geringem Kraftaufwand gezogen werden kann. Unter "gerätefesten" (Umlenk)Rollen sind am Gerät oder einem damit (ggf. schwenkbar) verbundenen Teil befestigte Rollen zu verstehen. Wichtig ist, daß diese Rollen nicht am Wagen befestigt sind.

Wenn die Einrichtung zur Festlegung der Kassettenposition durch einen am Wagen senkrecht zur Einschubrichtung verfahrbaren Hilfswagen gebildet wird, kann der Hilfswagen bzw. die damit verbundene Kassette senkrecht zur Einschubrichtung verschoben werden, wenn die Motorantriebe gleichsinnig laufen. Eine bevorzugte Ausgestaltung besteht jedoch darin, daß die Einrichtung zur Festlegung der Kassettenposition ein Paar von Spannbacken umfaßt, die am Wagen senkrecht zur Einschubrichtung gegen- und gleichsinnig bewegbar gelagert sind, und daß die beiden Spannbacken mit je einem der Trums zwischen den Umlenkrollenpaaren am Wagen gekoppelt sind. Diese Ausgestaltung gestattet das Öffnen bzw. das Schließen der Spannbacken, die die Kassette aufnehmen.

Auch bei dieser Ausgestaltung ist eine Verschiebung der Kassette senkrecht zur Einschubrichtung möglich, wenn nach einer Weiterbildung die Länge der beiderseits einer in Einschubrichtung verlaufenden Mittellinie befindlichen Schleifenteile gegensinnig zueinander veränderbar ist.

Durch die Ausgestaltung nach Anspruch 9 lassen sich mit nur zwei Motorantrieben drei Bewegungen ausführen: das Verschieben des Wagens in Einschubrichtung, die Verschiebung der Kassette senkrecht dazu (durch gleichsinniges verschieben der Spannbacken) und das Öffnen bzw. schließen der Spannbacken (beim Einlegen bzw. Entnehmen der Kassette).

Die Erfindung wird nachstehend an Hand der Zeichnungen näher erläutert. Es zeigen:
Fig. 1 eine bevorzugte Ausgestaltung der Erfindung,
Fig. 2 bis 5 teils einfachere, teils aufwendigere Varianten dieser Ausführungsform.

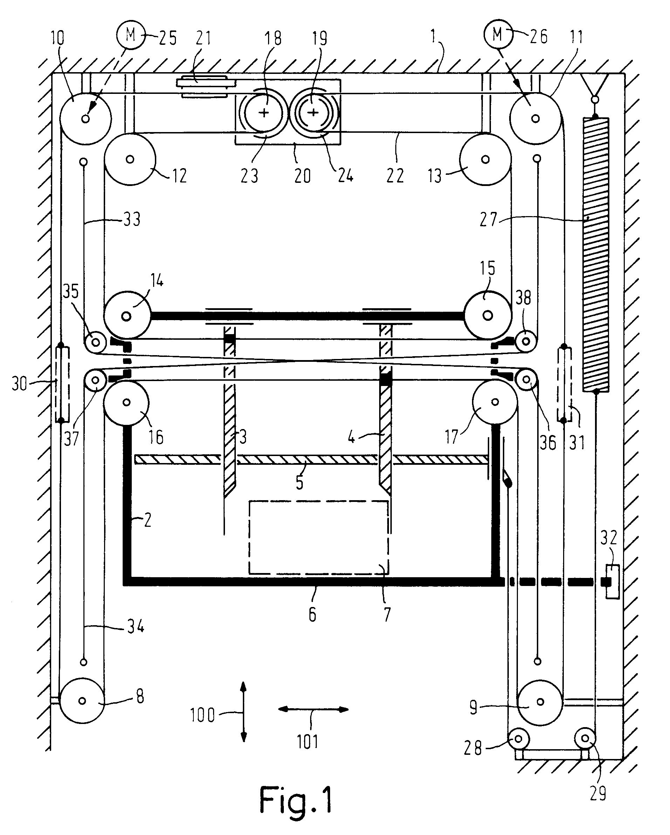

In Fig. 1 ist mit 1 ein Röntgenzielgerät bezeichnet, von dem der Übersichtlichkeit halber nur die äußere Kontur angedeutet ist. Das Röntgenzielgerät ist gegenüber der normalen Gebrauchslage um 90° versetzt dargestellt. Die durch den Pfeil 100 gekennzeichnete Einschubrichtung verläuft also in Wirklichkeit horizontal und nicht vertikal, während die durch den Pfeil 101 gekennzeichnete Richtung - bei stehendem Röntgengerät - vertikal verläuft.

Im Inneren des Röntgengerätes ist ein in Einschubrichtung (Pfeil 100) verschiebbarer Wagen 2 angeordnet; die dafür erforderlichen Führungen sind nicht näher dargestellt. Am Wagen sind zwei senkrecht zur Einschubrichtung verstellbare Spannbacken 3 und 4 sowie eine sich senkrecht zur Einschubrichtung erstreckende, in Einschubrichtung verschiebbar gelagerte Spannbacke 5 vorgesehen, die mit einer an Wagen 2 fest angeordneten Spannbacke 6 zusammenwirkt. Die Spannbacken 3..6 dienen der Halterung einer schematisch angedeuteten Kassette 7.

Das Spannen der Spannbacken 3 und 4, die Verschiebung der darin eingespannten Aufnahmekassette senkrecht zur Einschubrichtung und die Verschiebung des Kassettenwagens 2 in Einschubrichtung (100) erfolgt mittels zweier Motorantriebe, die über eine Anzahl von Rollen und eine geeignete Zugmittelführung auf den Wagen bzw. die Spannbacken 3, 4 einwirken.

An der Einschubseite des Röntgenzielgerätes (die in der Praxis nicht unten sondern an der linken Seite liegt) ist ein erstes Paar von Umlenkrollen 8, 9 befestigt. In Einschubrichtung demgegenüber versetzt, d.h. am anderen Ende des Zielgerätes befindet sich ein zweites Rollenpaar 10, 11. An der gleichen Seite des Röntgenzielgerätes - jedoch weiter nach innen versetzt - befindet sich ein drittes gerätefestes Rollenpaar 12, 13. Am Wagen selbst befinden sich ebenfalls zwei Rollenpaare 14, 15 bzw. 16, 17, und schließlich befindet sich ein weiteres Rollenpaar 18, 19 an einem Wagen 20, der in der Richtung 101 verschiebbar gelagert und mittels einer Feststellbremse 21 arretierbar ist. Die zur Zeichenebene senkrechten Achsen jedes Rollenpaares befinden sich auf jeweils einer zur Richtung 101 parallelen Geraden.

Über die genannten Rollen ist in einer geschlossenen Schleife ein geeignetes Zugmittel geführt, beispielsweise ein Riemen 22, der vorzugsweise als Zahnriemen ausgebildet ist. Der Riemen 22 ist über die Rollen 8, 10 zu der einen Umlenkrolle 18 am Hilfswagen, von dort über die gerätefeste Rolle 12 zu dem einen Rollenpaar 14, 15 am Wagen, von dort zu der anderen gerätefesten Rolle 13 des dritten Rollenpaares und über die andere Rolle 19 am Hilfswagen, die beiden gerätefesten Rollen 11 und 9 und das Rollenpaar 16 und 17 wieder zur Rolle 8 geführt. Diese Führung ist also derart, daß die Rollen eines gerätefesten Rollenpaares (z.B. 10, 11) durch die Schleife nicht direkt miteinander verbunden werden, sondern immer über ein Rollenpaar (in diesem Fall 14, 15) am Wagen. Die Rollen sind so angeordnet, daß die Trums, d.h. die Abschnitte der Schleife zwischen den Rollen, entweder in Richtung des Pfeiles 100 oder in Richtung des Pfeiles 101 verlaufen. Der Trum zwischen den Rollen 14 und 15 ist mit der Spannbacke 3 und der Trum zwischen den Rollen 16 und 17 mit der Spannbacke 4 verbunden.

Die Rollen 18, 19 sind mittels einer Kupplungseinrichtung so miteinander kuppelbar, daß die Drehung der einen Rolle sich zwangsläufig auf die andere Rolle überträgt. Zu diesem Zweck können auf den Rollenachsen Zahnräder 23, 24 angeordnet sein, von denen das eine (z.B. 23) fest mit der zugehörigen Rolle 18 verbunden ist, während das andere über eine im übrigen nicht näher dargestellte elektromagnetische Kupplung starr mit der Rolle 19 verbindbar, jedoch - bei gelöster Kupplung - auch unabhängig von der Rolle 19 bewegbar ist.

Wie schematisch angedeutet ist, werden die Rollen 10 und 11 von einem Elektromotor 25 bzw. 26 angetrieben. Die Elektromotoren können auch auf andere gerätefeste Rollen einwirken, beispielsweise auf die Rollen 8, 9 oder 12, 13 oder auf die Rollen 10 und 13 oder 10 und 12. Ebenso könnten die Elektromotoren auch direkt auf die Zahnriemen-Trums einwirken. Wichtig ist in all diesen Fällen, jedoch daß zwischen den Stellen, an denen die Elektromotoren wirken - seien es nun Umlenkrollen oder Trums - zumindest noch entweder eine der Umlenkrollen 18, 19 oder eines der Rollenpaare 14, 15 oder 16,17 am Wagen angeordnet ist. Die Motoren dürfen demnach also nicht z.B. mit den Rollen 8 und 10 gekoppelt sein, weil diese direkt durch ein Trum miteinander verbunden sind.

Zum Einlegen einer Kassette sind die Spannbacken 3, 4 ganz geöffnet, und der Wagen 2 ist ganz zur Einschubseite hin, d.h. nach links (unten in der Zeichnung) gefahren. Wenn die Kassette eingelegt wird, wird die Spannbacke 5 nach rechts gegen die Kraft einer Feder 27 weggedrückt, die über Rollen 28 und 29 mit der Spannbacke 5 verbunden ist, bis die Kassette zwischen den Spannbacken 5 und 6 eingelegt ist.

Danach werden die Spannbacken 3, 4 aufeinander zugefahren. Zu diesem Zweck werden die Rollen 18, 19 voneinander entkoppelt (d.h. die Kupplung wird gelöst), und die beiden Rollen 10 und 11 werden durch die Elektromotoren im Gegenuhrzeigersinn angetrieben. Damit sich die Spannbacken 3, 4 dabei nicht unsymmetrisch aufeinander zubewegen, wird der Hilfswagen 20 durch die Feststellbremse 21 arretiert.

Anschließend wird der Wagen 6 ganz nach rechts (oben in der Zeichnung) in die sogenannte Parkstellung gefahren. Zu diesem Zweck werden die Rollen 18, 19 durch Erregung der Magnetkupplung miteinander gekoppelt und die Rollen 10 und 11 mit entgegengesetztem Drehsinn, aber gleicher Drehzahl angetrieben (die Rolle 10 im Gegenuhrzeigersinn und die Rolle 11 im Uhrzeigersinn). Dadurch verlängert sich der Trum zwischen den Rollen 8 und 16 bzw. 9 und 17 im gleichen Maße, wie sich der Trum zwischen den Rollen 12 und 14 bzw. 13 und 15 verkürzt, was die Bewegung des Wagens in Einschubrichtung zur Folge hat.

Wenn zu einem späteren Zeitpunkt eine Aufnahme angefertigt werden soll, wird der Wagen wiederum eine gewisse, unter anderem vom Format der Kassette abhängige Strecke nach links bewegt; zu diesem Zweck werden die Motoren wiederum mit gleicher Drehzahl aber entgegengesetztem Drehsinn wie zuvor (Rolle 10 im Uhrzeigersinn, Rolle 11 im Gegenuhrzeigersinn) eingeschaltet. Wenn bei einer solchen Aufnahme die Kassette in der Höhe verfahren werden muß, werden - immer noch bei eingeschalteter Kupplung - die beiden Rollen 10 und 11 mit gleicher Drehzahl, aber auch mit gleichem Drehsinn angetrieben. Dies hat zur Folge, daß sich der Hilfswagen 20 je nach Drehsinn entweder zur Rolle 10 oder zur Rolle 11 hin bewegt (wobei sich die Transportrollen 18, 19 praktisch nicht drehen) was eine Bewegung beider Spannbacken 3, 4 in der entgegengesetzten Richtung zur Folge hat.

Die beiden Verschiebevorgänge der Kassette (in Richtung 100 und 101) müssen nicht - wie zuvor beschrieben - nacheinander erfolgen. Wenn die Rollen 10 und 11 mit unterschiedlichen Drehzahlen angetrieben werden, ergibt sich - bei eingeschalteter Kupplung - stets neben einer Bewegungskomponente in Richtung des Pfeiles 100 eine Komponente in Richtung des Pfeils 101, so daß eine gleichzeitige Verschiebung in den Richtungen 100 und 101 möglich ist.

Aus dem Vorstehenden ergibt sich, daß die Kupplung nur zum Öffnen oder Schließen der Spannbacken 3 gelöst weden muß. Im übrigen bleiben die Rollen 18, 19 miteinander gekoppelt, so daß die Spannbacken 3, 4 die Kassette 7 unter Spannung halten. Für alle Vorgänge, insbesondere aber für das Verfahren des Wagens 6 in Richtung des Pfeiles 100 sind beide Motoren 25 und 26 wirksam. Sie können daher von gleicher Bauart sein, und ihre Antriebsleistung kann - unter sonst gleichen Voraussetzungen - kleiner sein als bei einem Antrieb, bei dem die Verschiebung in Einschubrichtung mit nur einem einzigen Motor erfolgt.

Wenn der Wagen mit der Kassette in einer relativ kurzen Zeit von seiner Parkstellung in die Aufnahmestellung transportiert werden soll, ergeben sich beim Beschleunigen und Abbremsen relativ große Kräfte, die zur Erschütterungen des Röntgenzielgerätes führen können. Diese Erschütterungen können mit zwei in die Trums zwischen den Rollen 8 und 10 bzw. 9 und 11 aufgenommenen Ausgleichskörpern 30, 31 beseitigt werden, deren Masse einander gleich und jeweils halb so groß ist, wie die Summe der Massen des Wagens 6 und der Kassette 7. Bei einer Verschiebung des Kassettenwagens in Einschubrichtung werden die beiden Massen in entgegengesetzter Richtung beschleunigt bzw. verzögert, wodurch die mit dem Beschleunigen und Abbremsen des Wagens 6 auf das Zielgerät ausgeübten Reaktionskräfte kompensiert werden. Bei einer gleichsinnigen Verschiebung der Spannbacken 3, 4 mitsamt der darin befindlichen Kassette werden die beiden Ausgleichskörper gegensinnig bewegt. - Um zu verhindern, daß die Feder 27 die Spannbacke 5 und damit den Wagen 2 in Richtung auf die Einschubseite zu zieht ist der Wagen 2 mit einer Feststellbremse 32 versehen.

Die Winkelstellungen der Rollen 10, 11, 12 und 13 hängen von der Position des Wagens 6, von der Öffnung der Spannbacken und von deren Lage bezüglich einer in Einschubrichtung verlaufenden Bezugsgeraden ab, d.h. von der Position der Kassette relativ zum Wagen. Durch Bestimmung der Winkelstellung der Transportrollen - beispielsweise mittels jeweils eines damit gekoppelten Potentiometers oder Encoders - lassen sich also die Position der Kassette und die Öffnung der Spannbacken, d.h. die Abmessung der Kassette in Richtung des Pfeiles 101, messen.

Bei einer Verschiebung der Kassette in Richtung des Pfeiles 101 ändern sich beispielsweise die Winkelstellungen der Rollen 10 und 12 gleichsinnig. Die Summe dieser Winkelstellungen ist also der Verschiebung in Richtung 101 proportional. - Auf der anderen Seite werden die Rollen 10 und 11 bei einer Verschiebung des Wagens in Richtung des Pfeiles 100 gegensinnig zueinander verstellt; daher ist die Differenz dieser Winkelstellungen der Verschiebung des Kassettenwagens 2 in Richtung des Pfeiles 100 proportional. Beim Öffnen oder Schließen der Spannbacken 3, 4 ändert sich die Winkelstellung der Rollen 11 und 12 gegensinnig; die Öffnungs- oder Schließposition der Spannbacken läßt sich daher durch Messung der Winkelstellung der Rollen 11 und 12 mittels eines geeigneten Winkelgebers bestimmen. - Die verschiedenen Meßwerte werden also nicht durch eine einzige Winkelgröße bestimmt; sie lassen sich aber aus der Differenz oder der Summe der Winkelpositionen von jeweils zwei von insgesamt drei Rollen nach Größe und Vorzeichen eindeutig bestimmen.

Beim Spannen der Kassette ergibt sich ein asymmetrischer Zugkraftverlauf, der zu einem Verkanten des Wagens 2 führen kann. Dies läßt sich durch eine (nicht näher dargestellte) stabile Führung des Wagens 2 in Richtung des Pfeiles 100 verhindern. Die Anforderungen an die Genauigkeit der Führung können dadurch herabgesetzt werden, daß symmetrisch angeordnete feste Seilzüge 33, 34 über je zwei am Wagen befestigte Umlenkrollen 35 und 36 bzw. 37 und 38 so geführt sind, daß auf den Wagen gegensinnig wirkende und sich daher kompensierende Momente ausgeübt werden.

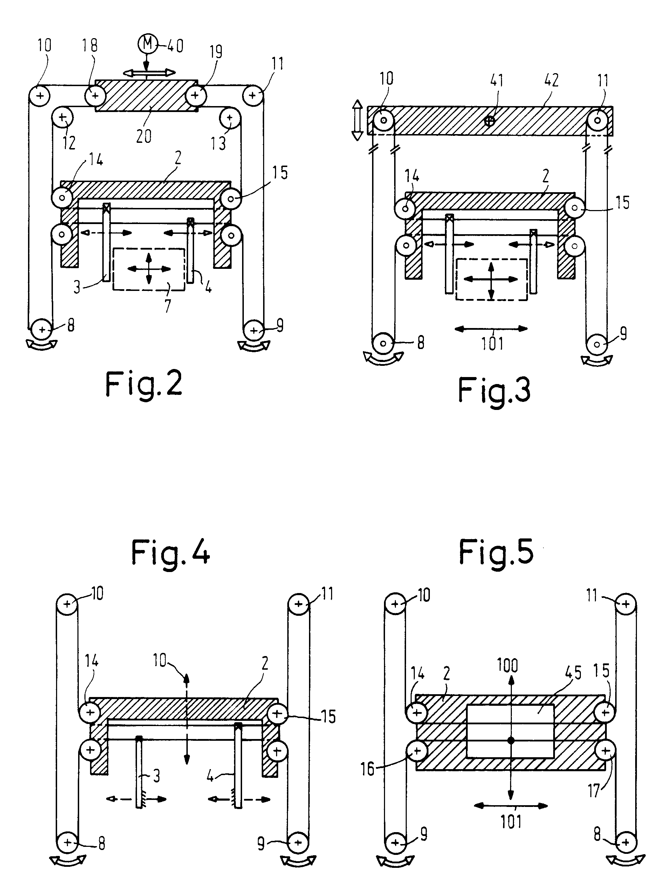

Bei der in Fig.1 dargestellten Anordnung können mit Hilfe von zwei Elektromotoren drei Funktionen ausgeführt werden; jedoch können allenfalls zwei Funktionen gleichzeitig ausgeführt werden. Eine in dieser Hinsicht leistungsfähigere Anordnung ist in Fig.2 skizziert. Sie unterscheidet sich von der Anordnung nach Fig.1 dadurch, daß der Wagen 20 durch einen zusätzlichen Motor 40 angetrieben wird und daß die auf ihm vorgesehenen Rollen 18, 19 nicht miteinander kuppelbar sind. Damit lassen sich alle drei Funktionen gleichzeitig ausführen.

Eine Variante dieser Ausführungsform ist in Fig.3 dargestellt. An Stelle des Wagens 20 ist ein am Röntgenaufnahmegerät um die Achse 41 schwenkbarer, zweiarmiger Hebel 42 vorgesehen, auf dem die Rollen 10 und 11 befestigt sind. Die Rollen 10 bzw. 11 sind über einen einzigen Seiltrum mit den Rollen 14 und 15 am Wagen 2 verbunden; die gerätefesten Rollen 12, 13 und die Rollen 18, 19 entfallen hierbei also. Eine Verschiebung der Kassette in der durch den Doppelpfeil 101 angegebenen Richtung ist durch Schwenken des Hebels um die Achse 41 mittels eines nicht näher dargestellten Elektromotors möglich. Diese Ausführungsform hat mit derjenigen nach Fig.1 und Fig.2 gemeinsam, daß zur Verstellung der Kassette 7 in Richtung 101 die Länge zweier Schleifenteile (hier: um die Rollen 10 und 11) gegensinnig zueinander veränderbar ist.

Die Ausführungsform nach Fig.4 hat mit derjenigen nach Fig.3 gemeinsam, daß die Rollen 10 und 11 über nur einen Trum direkt mit den Rollen 14 und 15 am Wagen 2 verbunden sind. Da die Rollen 10 und 11 aber am Zielgerät befestigt sind und da kein Hilfswagen (20) zur Änderung der Länge der Schleifen um die Rollen vorhanden ist, ist mit dieser Ausführungsform eine Verschiebung der Kassette in Richtung 101 nicht möglich. Es können mit Hilfe der Motorantriebe die auf die Rollen 10, 11, aber auch auf die Rollen 8, 9 oder die Rollen 9, 10 (nicht aber auf die Rollen 10 und 8 oder 9 und 11) einwirken können, daher nur noch zwei Funktionen ausgeführt werden: das Öffnen und Schließen der Spannbacken 3, 4 und das Verschieben des Wagens 2 in Richtung des Doppelpfeils 100. Eine solche Anordnung ist für Röntgenaufnahmegeräte nützlich, bei denen eine Höhenunterteilung des Kassettenformats und damit eine Verschiebung der Kassette in Richtung 101 nicht erforderlich ist, wie beispielsweise bei einem Buckyaufnahmegerät, bei dem die Aufnahmekassette lediglich von der Einschubposition in die Aufnahmeposition gefahren werden muß.

Die Ausführungsform nach Fig.5 unterscheidet sich von derjenigen nach Fig.4 dadurch, daß zur Verschiebung der Kassette in Richtung 101 ein Hilfswagen 45 zur Aufnahme dieser Kassette vorgesehen ist, der auf nicht näher dargestellte Weise an dem Wagen 2 in Richtung 101 verschiebbar angeordnet ist. Dieser Hilfswagen ist mit einem der beiden Trums zwischen den Rollen 14, 15 oder 16, 17 verbunden. Mit einem solchen Gerät ist es möglich, die Aufnahmekassette zweidimensional, d.h. in den Richtungen 100 und 101 zu positionieren; zum Einspannen der Kassette muß ein gesonderter, in Fig.5 nicht näher dargestellter Mechanismus vorhanden sein.

Die Figuren 4 und 5 zeigen besonders deutlich die H-förmige Schleifenführung, die es ermöglicht, die Verschiebung des Kassettenwagens 2 mit Hilfe von zwei Antriebsmotoren durchzuführen.

## Patentansprüche

1. Röntgenaufnahmegerät mit einer Aufnahmekassette (7) und einem Wagen (2), auf dem die Aufnahmekassette in Einschubrichtung verfahrbar ist, wobei der Wagen mit einer Einrichtung (3,4; 45) zur Positionierung der Kassette senkrecht zur Einschubrichtung versehen ist, mit zwei gerätefesten und zwei am Wagen befestigten, in Einschubrichtung gegeneinander versetzten Paaren von Umlenkrollen (8....11 und 14....17) und mit unabhängig voneinander steuerbaren Motorantrieben, die mittels eines über die Rollen geführten Zugmittels auf die Aufnahmekassette einwirken, wobei die Trums des Zugmittels zwischen jeweils einer der Rollen am Wagen und einer der gerätefesten Rollen parallel zueinander verlaufen,
dadurch gekennzeichnet, daß das Zugmittel eine geschlossene Schleife bildet und jeweils von der einen Rolle (z.B. 10) eines der gerätefesten Rollenpaare (10,11) zu der anderen Rolle (11) desselben Rollenpaares über eines der Rollenpaare (14,15) am Wagen (2) geführt ist, daß die Schleife mit der Einrichtung (3,4; 45) zur Positionierung der Kassette gekoppelt ist und daß die beiden gleichzeitig einschaltbaren Motorantriebe (25,26) auf jene Trums oder auf jene der gerätefesten Rollen (10,11) einwirken, zwischen denen sich bezüglich des Zugmittelverlaufs wenigstens eine der am Wagen befestigten Rollen befindet.

2. Röntgengerät nach Anspruch 1,
dadurch gekennzeichnet, daß die Einrichtung zur Festlegung der Kassettenposition einen senkrecht zur Einschubrichtung verfahrbaren Hilfswagen (45) umfaßt, und daß einer der Trums zwischen den Rollen (14....17) eines der am Wagen befestigten Rollenpaare mit dem Hilfswagen (45) gekoppelt ist (Fig. 5).

3. Röntgenaufnahmegerät nach Anspruch 1,
dadurch gekennzeichnet, daß die Einrichtung zur Festlegung der Kassettenposition ein Paar von Spannbacken (3,4) umfaßt, die am Wagen senkrecht zur Einschubrichtung (100) gegen- und gleichsinnig bewegbar gelagert sind, und daß die beiden Spannbacken mit je einem der Trums zwischen den Rollenpaaren (14,15; 16,17) am Wagen gekoppelt sind.

4. Röntgenaufnahmegerät nach Anspruch 3,
dadurch gekennzeichnet, daß die Länge der beiderseits einer in Einschubrichtung (100) verlaufenden Mittellinie befindlichen Schleifenteile gegensinnig zueinander veränderbar ist.

5. Röntgenaufnahmegerät nach Anspruch 4,
dadurch gekennzeichnet, daß ein Hebel (42) um eine durch die Mittellinie verlaufende Achse (41) schwenkbar angeordnet ist und daß eines der beiden gerätefesten Rollenpaare (10,11) auf dessen beiden Armen angeordnet ist (Fig. 3).

6. Röntgenaufnahmegerät nach Anspruch 4,
dadurch gekennzeichnet, daß die Zugmittelschleife von einem der gerätefesten Rollenpaare (10) über je eine an einem zwischen diesem Rollenpaar verfahrbaren Hilfswagen (20) befestigten Umlenkrolle (18, 19) zu einem der am Wagen (2) befestigten Rollenpaare (14,15) geführt ist.

7. Röntgenaufnahmegerät nach Anspruch 6,
dadurch gekennzeichnet, daß ein drittes gerätefestes Paar (12,13) von Umlenkrollen vorgesehen ist und daß die Zugmittelschleife von je einer der Rollen (18,19) am Hilfswagen (20) über je eine der Rollen (12,13) des dritten Paares zu den Rollen (14,15) am Wagen geführt ist.

8. Röntgenaufnahmegerät nach einem der Ansprüche 6 oder 7,
dadurch gekennzeichnet, daß der Hilfswagen (20) mittels eines weiteren Motorantriebes (40) senkrecht zur Einschubrichtung verschiebbar ist (Fig. 2).

9. Röntgenaufnmahmegerät nach Anspruch 6 oder 7,
dadurch gekennzeichnet, daß der Hilfswagen (20) mit einer Kupplungseinrichtung (23,24) versehen ist, durch die die beiden auf dem Hilfswagen angeordneten Umlenkrollen (18,19) so miteinander kuppelbar sind, daß die Bewegung der einen Rolle sich zwangsläufig auf die andere überträgt.

10. Röntgenaufnahmegerät nach Anspruch 9,
dadurch gekennzeichnet, daß der Hilfswagen (20) mit einer Feststellbremse (21) arretierbar ist.

11. Röntgenaufnahmegerät nach einem der Ansprüche 1 bis 10,
dadurch gekennzeichnet, daß in die Trums zwischen den Paaren von gerätefesten Umlenkrollen Ausgleichskörper (30,31) aufgenommen sind, deren Massen gleich groß sind und zumindest annähernd der Hälfte der Masse des Wagens (2) einschließlich der Aufnahmekassette entsprechen.

12. Röntgenaufnahmegerät nach Anspruch 3,
dadurch gekennzeichnet, daß zur Bestimmung der Öffnungsweite der Spannbacken und/oder deren Position in Einschubrichtung (100) bzw. quer dazu (101) die absoluten Drehwinkel an mindestens drei gerätefesten Umlenkrollen (10,11,12) gemessen und die Bestimmungsgrößen durch Kombination von jeweils wenigstens zwei Meßwerten ermittelt werden.

## Claims

1. An X-ray apparatus, comprising a film cassette (7) and a carriage (2) on which the film cassette is displaceable in the loading direction, the carriage comprising a device (3, 4; 45) for positioning the cassette perpendicularly to the loading direction, two respective pairs of guide rollers (8 ... 11 and 14 ... 17) which are arranged so as to be offset with respect to one another in the loading direction and which are secured to the apparatus and mounted on the carriage, respectively, and independently controllable motor drives which act on the film cassette via a traction means guided via the rollers, the traction means sections between each time one of the rollers on the carriage and one of the rollers secured to the apparatus extending parallel to one another, characterized in that the traction means forms a closed loop and is guided each time from one roller (for example 10) of a roller pair (10, 11) secured to on the apparatus to the other roller (11) of the same roller pair via one of the roller pairs (14, 15) on the carriage (2), the loop being coupled to the device (3, 4; 45) for positioning the cassette, the two simultaneously activatable motor drives (25, 26) acting on those traction means sections, or on those of the rollers(10, 11) secured to the apparatus, wherebetween, relative to the course of the traction means, at least one of the rollers secured to the carriage is situated.

2. An X-ray apparatus as claimed in Claim 1, characterized in that the device for fixing the cassette position comprises an auxiliary carriage (45) which is displaceable perpendicularly to the loading direction, one of the traction means sections between the rollers (14 ... 17) of one of the roller pairs secured to the carriage being coupled to the auxiliary carriage (45) (Fig.5).

3. An X-ray apparatus as claimed in Claim 1, characterized in that the device for fixing the cassette position comprises a pair of clamping jaws (3, 4) which are arranged so as to be displaceable on the carriage, perpendicularly to the loading direction (100) and in the same and in the opposite sense, the two clamping jaws being coupled to a respective traction means section between the roller pairs (14, 15; 16, 17) on the carriage.

4. An X-ray apparatus as claimed in Claim 3, characterized in that the length of the loop sections situated to both sides of a centre line extending in the loading direction (100) can be changed in the opposite sense with respect to one another.

5. An X-ray apparatus as claimed in Claim 4, characterized in that a lever (42) is arranged so as to be pivotable about an axis (41) extending through the centre line and that one of the two roller pairs (10, 11) secured to the apparatus carriage is arranged on the two arms thereof (Fig. 3).

6. An X-ray apparatus as claimed in Claim 4, characterized in that the traction means loop is guided from one of the rollers (10) secured to the apparatus, via a respective guide roller (18, 19) which is secured to an auxiliary carriage (20) which is displaceable between this roller pair, too one of the roller pairs (14, 15) secured to the carriage (2).

7. An X-ray apparatus as claimed in Claim 6, characterized in that there is provided a third pair (12, 13) of guide rollers secured to the apparatus, the traction means loop being guided from a respective one of the rollers (18, 19) on the auxiliary carriage (20), via a respective one of the rollers (12, 13) of the third pair, to the rollers (14, 15) on the carriage.

8. An X-ray apparatus as claimed in Claim 6 or 7, characterized in that the auxiliary carriage (20) can be displaced perpendicularly to the loading direction by means of a further motor drive (40) (Fig. 2).

9. An X-ray apparatus as claimed in Claim 6 or 7, characterized in that the auxiliary carriage (20) comprises a coupling device (23, 24) whereby the two guide rollers (18, 19) mounted on the auxiliary carriage can be coupled to one another so that the movement of one roller is imparted to the other roller.

10. An X-ray apparatus as claimed in Claim 9, characterized in that the auxiliary carriage (20) can be locked by means of a locking brake (21).

11. An X-ray apparatus as claimed in any one of the Claims 1 to 10, characterized in that in the traction means sections between the pairs of guide rollers secured to the apparatus there are inserted compensating members (30, 31) whose masses are equal and amount at least approximately to half the mass of the carriage (2), including the film cassette.

12. An X-ray apparatus as claimed in Claim 3, characterized in that in order to determine the opening width of the clamping jaws and/or their position in the loading direction (100) or the direction transversely threof (101), the absolute angles of rotation are measured for at least three guide rollers (10, 11, 12) secured to the apparatus, the defining values being determined by combination of each time at least two measurement values.

## Revendications

1. Appareil de radiographie comportant une cassette radiographique (7) et un chariot (2) sur lequel la cassette radiographique peut être déplacée dans la direction d'insertion, le chariot étant muni d'un dispositif (3, 4; 45) pour positionner la cassette perpendiculairement à la direction d'insertion, deux paires de poulies de renvoi (8...11) fixées à l'appareil et deux paires de poulies de renvoi (14...17) fixées au chariot, paires qui sont respectivement décalées l'une par rapport à l'autre dans la direction d'insertion, et des entraînements par moteur pouvant être commandés indépendamment les uns des autres et agissant sur la cassette radiographique par des moyens de traction conduits sur les poulies, les brins des moyens de traction, compris entre l'une des poulies du chariot et l'une des poulies fixées à l'appareil s'étendant parallèlement entre eux, caractérisé en ce que les moyens de traction forment une boucle fermée et sont conduits à partir de l'une (par exemple 10) des poulies d'une paire de poulies (10, 11) fixée à l'appareil vers l'autre poulie (11) de la même paire de poulies via l'une des paires de poulies (14, 15) fixées au chariot (2), en ce que la boucle est couplée au dispositif (3, 4; 45) pour positionner la cassette, et en ce que les deux entraînements par moteur (25, 26) pouvant être démarrés simultanément, agissent sur celui des brins ou celle des poulies (10, 11) fixées à l'appareil entre lesquels, en ce qui concerne le trajet des moyens de traction, est située au moins l'une des poulies fixées au chariot.

2. Appareil de radiographie selon la revendication 1, caractérisé en ce que le dispositif de fixation de la position de cassette comporte un chariot auxiliaire (45) pouvant être déplacé perpendiculairement à la direction d'insertion, et en ce que l'un des brins s'étendant entre les poulies (14...17) d'une paire de poulies fixée au chariot est couplé au chariot auxiliaire (45) (figure 5).

3. Appareil de radiographie selon la revendication 1, caractérisé en ce que le dispositif de fixation de la position de cassette comporte une paire de mâchoires de serrage (3, 4) qui sont appuyées sur le chariot de façon à pouvoir être déplacées dans des sens opposés et dans le même sens, perpendiculairement à la direction d'insertion (100) et en ce que les deux mâchoires de serrage sont couplées respectivement aux brins s'étendant entre les paires de poulies (14, 15; 16, 17) du chariot.

4. Appareil de radiographie selon la revendication 3, caractérisé en ce que les longueurs des parties de boucle situées de part et d'autre d'une ligne centrale s'étendant dans la direction d'insertion (100) peuvent être modifiées entre elles dans des sens opposés.

5. Appareil de radiographie selon la revendication 4, caractérisé en ce qu'il est prévu un levier (42) disposé de façon à pouvoir pivoter autour d'un axe (41) s'étendant par la ligne centrale et en ce que l'une des deux paires de poulies (10, 11) fixées à l'appareil est disposée sur les deux bras de celui-ci (figure 3).

6. Appareil de radiographie selon la revendication 4, caractérisé en ce que la boucle de moyens de traction est conduite à partir d'une paire de poulies (10) fixée à l'appareil vers une paire de poulies (14, 15) fixée au chariot (2), via une poulie de renvoi respective (18, 19) fixée à un chariot auxiliaire (20) pouvant être déplacé entre cette paire de poulies.

7. Appareil de radiographie selon la revendication 6, caractérisé en ce qu'il est prévu une troisième paire (12, 13) de poulies de renvoi fixée à l'appareil et en ce que la boucle de moyens de traction est conduite à partir de l'une respective des poulies (18, 19) du chariot auxiliaire (20) vers les poulies (14, 15) du chariot via l'une respective des poulies (12, 13) de la troisième paire.

8. Appareil de radiographie selon l'une quelconque des revendications 6 et 7, caractérisé en ce que le chariot auxiliaire (20) peut être déplacé perpendiculairement à la direction d'insertion au moyen d'un autre entraînement par moteur (40) (figure 2).

9. Appareil de radiographie selon la revendication 6 ou 7, caractérisé en ce que le chariot auxiliaire (20) est muni d'un dispositif de couplage (23, 24) permettant de coupler les deux poulies de renvoi (18, 19) disposées sur le chariot auxiliaire, de telle manière que le mouvement de l'une des poulies soit transmis à l'autre poulie.

10. Appareil de radiographie selon la revendication 9, caractérisé en ce que le chariot auxiliaire (20) peut être bloqué au moyen d'un frein d'arrêt (21).

11. Appareil de radiographie selon l'une des revendications 1 à 10, caractérisé en ce que, dans les brins s'étendant entre les paires de poulies de renvoi fixées à l'appareil, sont insérés des corps de compensation (30, 31) dont les masses sont égales et correspondent au moins à peu près à la moitié de la masse du chariot (2), y compris la cassette radiographique.

12. Appareil de radiographie selon la revendication 3, caractérisé en ce que, pour déterminer la largeur d'ouverture des mâchoires de serrage et/ou leur position dans la direction d'insertion (100) ou dans le sens transversal (101) à celle-ci, les angles de rotation absolus sont mesurés pour au moins trois poulies de renvoi (10, 11, 12) fixées à l'appareil, les valeurs de détermination étant obtenues par combinaison d'au moins deux valeurs de mesure.
